# EUROPEAN PATENT APPLICATION

(11) **EP 3 936 007 A1**
(43) Date of publication of application: **12.01.2022**
(21) Application number: 20184910.6
(22) Date of filing: 09.07.2020
(51) Int. Cl.: A47J 27/21, F24H 1/10, A47J 31/56

(54) **HOT WATER AND STEAM GENERATING DEVICE**

(71) Applicant: Bleckmann GmbH & Co. KG, 5112 Lamprechtshausen (AT)
(72) Inventor: HAAS, Clemens, 5340 ST. GILGEN (AT); HÖFER, Johann, 5113 ST. GEORGEN (AT)
(74) Representative: Eisenführ Speiser

(57) **Abstract**

The present invention relates to a hot water and steam generating device (100) comprising: a housing (110) having an inlet port (110a) and an outlet port (110b), wherein the housing (110) is adapted to receive a fluid to be heated and/or vaporized, the housing (110) having a lower section (112) and an upper section (114), wherein the inlet port (110a) is preferably arranged at the lower section (112) of the housing (110) and the outlet port (110b) is preferably arranged at the upper section (114) of the housing (110); at least one heating device (120) which projects into the interior of the housing (110), wherein the at least one heating device (120) has at least one heated area at least in the region of the lower section (112) of the housing (110); a pump (130) which is capable of pumping fluid into or through the interior of the housing (110); and a single sensor (140), the single sensor (140) being configured to determine the temperature of the fluid in the interior of the housing (110) and the filling level of the fluid in the interior of the housing (110).

## Description

### FIELD OF THE INVENTION

The present invention relates to hot water and steam generating devices, in particular to hot water and steam generating devices which are able to switch between two operation modes, in which the hot water and steam generating device heats up a flowing fluid to a desired temperature or brings a stagnant fluid to boil in order to generate steam.

### BACKGROUND OF THE INVENTION

For the production of hot fluids, especially hot water or steam, a large number of different designs and types of hot water and/or steam generating devices are known in the state of art. Household appliances in which hot water and/or steam generating devices are used are for example steam cleaners, steam irons, washing machines, dish washers, but also those for preparing food and/or hot drinks, such as coffee machines, espresso machines, milk frothers, steam cookers, kettles and others.

In its simplest form, a hot water and steam generating device usually consists of a heating device, a container in which fluid to be heated is accommodated and a pump. The heating device is either configured to heat up a flowing fluid in the container to a predefined temperature or to bring a stagnant fluid to boil in order to generate steam.

However, it is not possible to determine the filling level of fluid in the container in a simple, reliable and cost-effective manner.

It is an objective of the present invention to provide a hot water and steam generating device which is capable of solving the above mentioned problems.

### SUMMARY OF THE INVENTION

The objective is achieved by a hot water and steam generating device and a method for controlling the hot water and steam generating device according to the present invention as defined in the independent claims. Further developments of the invention are defined in the dependent claims.

According to a first aspect, a hot water and steam generating device comprises a housing having an inlet port and an outlet port, wherein the housing is adapted to receive a fluid to be heated and/or vaporized, the housing having a lower section and an upper section, wherein the inlet port is preferably arranged at the lower section of the housing and the outlet port is preferably arranged at the upper section of the housing; at least one heating device which projects into the interior of the housing, wherein the at least one heating device has at least one heated area at least in the region of the lower section of the housing; a pump which is capable of pumping fluid into or through the interior of the housing; and a single sensor, wherein the single sensor is configured to determine the temperature of the fluid in the interior of the housing and the filling level of the fluid in the interior of the housing.

The hot water and steam generating device according to the first aspect is able to determine the fluid temperature in the interior of the housing. Further, the device is capable of determining the fluid level in the interior of the housing. Thus, the hot water and steam generating device is capable of determining the fluid temperature and also the fluid level in the housing by a single sensor. This improves reliability, as there is only one sensor as a potential source of error. Furthermore, it is possible to save costs due to the reduction of parts, the simple structure and the inexpensive components.

In some embodiments, the sensor is configured to determine the temperature of the fluid in the interior of the housing by means of measuring a resistance change of the sensor.

In some embodiments, the sensor is configured to determine the filling level of the fluid in the interior of the housing by means of measuring a capacity change of the ratio of air volume and fluid volume in the interior of the housing. In a further embodiment, the capacity change is determined between the sensor and the heating device.

In some embodiments, the sensor is arranged above the heated area of the heating device, preferably horizontally above the heated area of the heating device. By doing this, the fluid temperature determination is not affected by the heating device.

In some embodiments, the sensor is arranged between the heated area of the heating device and the outlet port of the housing.

In some embodiments, the sensor is a NTC sensor having preferably a conductive sheath. By using a NTC sensor with a conductive sheath, for instance a metal sheath, it is possible to determine both, a fluid temperature and also a capacity change in the interior of the housing.

In some embodiments, the pump is a wet-type rotor pump.

In some embodiments, the housing has a substantially cylindrical shape, which is preferably tapered in the direction to the outlet port of the housing. This enhances the fluid flow properties, as the edges of the housing are curved.

In some embodiments, the housing consists of two parts, a lower part comprising the inlet port and an opening for the pump, and an upper part comprising the outlet port, at least one opening for the heating device and an opening for the sensor. By doing this, the assembly of the housing and further the exchange of components are simplified.

In some embodiments, the housing of the hot water and steam generating device is made of a non-conductive material such as a plastics material. By using an insulating material for the housing, the measurement of the capacity change in the housing is not affected by the same.

In some embodiments, the heating device is a tubular heating device. Further, the heating device is fluid-tightly coupled to the housing. The heating device may be a resistance heating device preferably comprising a tubular pipe, an elongated coiled resistance heating wire and a heat conducting electrically insulating material.

According to a method for controlling a hot water and steam generating device, the method comprises two operation modes: i) a flow through heater operation mode comprising the steps of: pumping fluid to be heated from the inlet port through the housing to the outlet port, wherein the fluid is heated by the heating device in the housing; determining the fluid temperature in the housing by the sensor, and adjusting the fluid flow rate to reach a predetermined fluid temperature at the outlet port of the housing; and ii) a steam generator operation mode comprising the steps of: pumping a fluid to be vaporized into the interior of the housing until the heated area of the heating device is covered with the fluid, heating up the fluid to generate steam which flows through the outlet port of the housing, and controlling the fluid level by determining a capacity change between air volume and fluid volume in the housing by the sensor; wherein the hot water and steam generating device is switchable between the flow through heater operation mode and the steam generator operation mode.

In some embodiments of the method for controlling a hot water and steam generating device, the sensor and the heating device act as electrodes configured to determine the capacity change between air volume and fluid volume in the interior of the housing.

The expressions such as "up", "down", "above", "below", "on top", "beneath", or analogous expressions for a relative spatial position along a vertical axis, if any, used in the following description refer to an orientation of the objects shown in the figures in such a way that the reference signs used in these drawings can be read in a normal orientation.

Moreover, the expressions such as "in front", "behind", "left" and "right" or analogous expressions for a spatial position relative to a viewer are defined relative to the viewer's perspective view on the drawings, wherein "in front" or analogous expressions relate to a relative position closer to the viewer, and "behind" or analogous expressions relate to a relative position further away from the viewer.

### BRIEF DESCRIPTION OF THE DRAWINGS

- Fig. 1: shows a perspective, partial sectional view of a hot water and steam generating device with partially exposed interior according to an embodiment of the present invention;
- Fig. 2: shows a sectional view of the hot water and steam generating device shown in Fig. 1 and operating in a flow through heater operation mode; and
- Fig. 3: shows a sectional view of the hot water and steam generating device shown in Fig. 1 and operating in a steam generator operation mode.

### DETAILED DESCRIPTION OF THE EMBODIMENTS

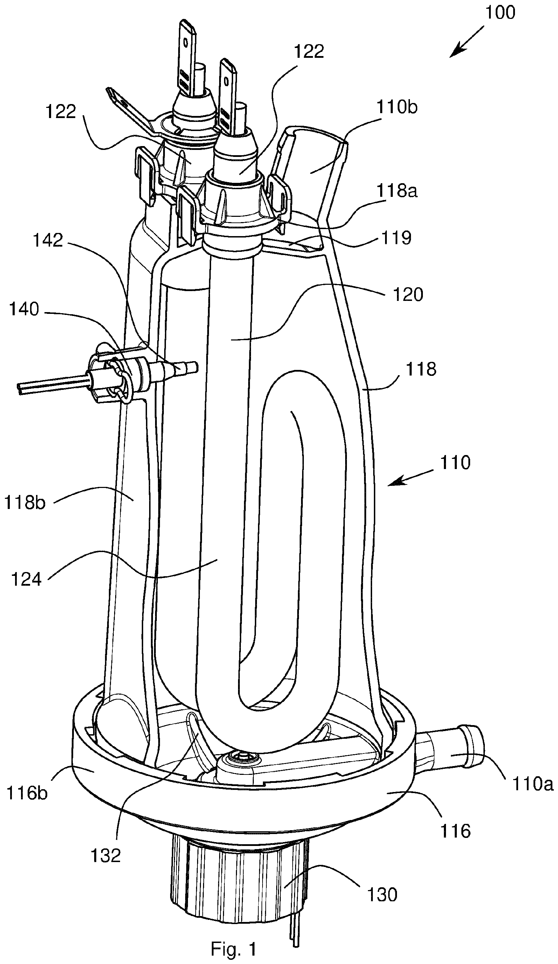

Fig. 1 shows a perspective, partial sectional view of a hot water and steam generating device 100 with partially exposed interior according to a preferred embodiment of the present invention. The hot water and steam generating device 100 comprises as main components a substantially cylindrical hollow housing 110, a heating device 120 positioned at least partially inside housing 110, a pump 130 arranged at the bottom of housing 110 and a sensor 140. In Fig. 1, cylindrical housing 110 is aligned such that the central longitudinal axis of the cylinder extends in a vertical direction. However, it is also possible to align housing 110, and thus device 100, in other orientations, such as an orientation at an angle of 45° or an orientation in which the central longitudinal axis of the cylinder is horizontal.

Housing 110 is preferably made of a non-conductive material such as a plastics material and has a horizontally aligned inlet port 110a at a lower section 112 and an almost vertically oriented outlet port 110b at an upper section 114 of housing 110. However, other orientations of the inlet port 110a and/or the outlet port 110b such as a horizontally aligned outlet port 110b or any other orientations are also conceivable. Inlet port 110a is configured to guide fluid to be heated or to be vaporized into the interior of housing 110, wherein outlet port 110b is configured to release heated fluid or steam which has been generated in housing 110. Inlet port 110a and outlet port 110b are aligned with each other so that they are preferably arranged one above the other as shown in Figs. 1 to 3.

In the present embodiment, housing 110 consists of two parts, a lower part 116 and an upper part 118. Lower part 116 of housing 110 comprises a substantially circular bottom plate 116a and a cylindrical side wall 116b thereupon. Inlet port 110a is integrated in side wall 116b, wherein inlet port 110a is preferably arranged perpendicular to side wall 116b of lower part 116 of two-piece housing 110 and further positioned adjacent to bottom plate 116a. It may also be desirable to manufacture housing 110 in one-piece wherein it is closed via a lid or the like.

Further, a pump 130 having a rotor 132 is removably integrated in bottom plate 116a of lower part 116 of housing 110, wherein rotor 132 of pump 130 is preferably positioned centered to bottom plate 116a. Bottom plate 116a preferably has a curved shape for receiving the rotor 132 of pump 130.

Rotor 132 of pump 130 sucks fluid from inlet port 110a into the interior of housing 110 or, depending on the operation mode of hot water and steam generating device 100, sucks fluid from inlet port 110a through the interior of housing 110 to outlet port 110b. Rotor 132 is arranged in the interior of housing 110, wherein rotor 132 is connected to driving means (not shown) of pump 130 by means of a driving shaft (not shown). Preferably, pump 130 is positioned on the central longitudinal axis of housing 110. Further, pump 130 is partly arranged in housing 110, but it may also be desirable to not only arrange rotor 132 of pump 130 in housing 110, but the complete pump 130. In the present embodiment, pump 130 is a wet runner pump but not limited thereto. Rather, any pump 130 suitable for pumping fluids may be used as well.

Upper part 118 of housing 110 comprises a substantially circular top plate 118a and a substantially cylindrical side wall 118b underneath, wherein side wall 118b is preferably tapered in direction of top plate 118a. Tapered side wall 118b is configured to enhance the fluid flow and/or steam flow properties. Outlet port 110b is integrated in upper part 118 of housing 110, wherein outlet port 110b is preferably arranged almost parallel to side wall 118b and further positioned adjacent to top plate 118a. Outlet port 110b may also be integrated in side wall 118b having a horizontally orientation. In addition, top plate 118a preferably has a shape that is favorable for the fluid flow and/or steam flow, such as a curved form in the direction of outlet port 110b. Preferably a protecting device 119, such as a plate or a bar, is attached to the side wall 118b of the housing 110, wherein the protecting device 119 is preferably aligned underneath the outlet port 110b and perpendicular to side wall 118b. The protecting device 119 is configured to prevent fluid drops from splashing into the outlet port 110b when the fluid is heated up to generate steam.

In order to connect lower part 116 and upper part 118 of housing 110 in a fluid-tight manner, side wall 116b of lower part 116 preferably has a larger diameter than that of side wall 118b of upper part 118 of housing 110. This allows upper part 118 to be inserted, pressed or screwed into lower part 116 of housing 110. Lower part 116 and upper part 118 of housing 110 are preferably fluid-tightly sealed with a sealing member 150, such as an O-ring arranged between lower part 116 and upper part 118. Other fluid-tight connection possibilities are also conceivable, including both detachable and non-detachable connections such as, for instance, gluing or welding.

Hot water and steam generating device 100 further comprises at least one heating device 120 which is preferably a resistance heating device and which projects from top plate 118a of upper part 118 of housing 110 through the interior of housing 110 up to almost reaching rotor 132 of pump 130 near bottom plate 116a of lower part 116 of housing 110. Preferably, heating device 120 has at least one heated area or rather a heating portion which is situated in the region of lower section 112 of housing 110, which extends from bottom plate 116a of lower part 116 of housing 110 to at least half of the height of the interior of housing 110. Upper section 114 of housing 110 corresponds substantially to the unheated area of heating device 120.

Heating device 120 is preferably an elongated and tubular heating device having two end portions 122 serving as power connections. End portions 122 of heating device 120 are fluid-tightly coupled to top plate 118a of housing 110 and extend vertically upwardly via top plate 118a to the outside. Heating device 120 preferably comprises a tubular conductive sheath 124, at least one heating element 126 and an electrically insulating material 128, as for example magnesium oxide which surrounds heating element 126. In order to obtain at least one heated area and at least one unheated area of heating device 120, heating device 120 is preferably completely filled with electrically insulating material 128, wherein only the heated area of heating device 120 is equipped with heating element 126. Heating element 126 may be, for instance, an elongated coiled resistance heating wire which is electrically coupled with terminals provided at the end portions 122. Further, heating device 120 has a conductive sheath 124, in particular a heat-conducting and electrically conducting sheath, which consists of any suitable material, as for example stainless steel. Depending on, for instance, the heating power of heating device 120, a larger or smaller heated area may be advantageous.

The arrangement of heating device 120 is preferably such that as much heat as possible can be introduced into the heated area of housing 110. Therefore, the part of heating device 120 situated in lower section 112 of housing 110 is bent several times by 180°, but not limited thereto. Preferably, this part of heating device 120 forms the heated area.

Side wall 118b of upper part 118 of housing 110 further has an opening for receiving a sensor 140. Sensor 140, extending at least substantially horizontally, protrudes into the interior of housing 110, in particular into upper section 114 of housing 110 which is situated in the unheated area of heating device 120. Preferably, sensor 140 is positioned between the heated area of heating device 120 and outlet port 110b of housing 110, wherein sensor 140 is arranged on the side of housing 110 which is opposite to that of inlet port 110a and outlet port 110b. In the present embodiment, sensor 140 is preferably a multisensor, in particular a NTC sensor having a conductive sheath 142, in particular a metal sheath.

A fluid-tightly sealing of heating device 120 and sensor 140 to housing 110 may preferably be carried out by elastomer components which seal by radial and/or axial forces. However, other sealing possibilities may also be used, e.g. all sealing systems described in DE utility model 20 2010 011 994 or EP patent application 1 731 850.

On the one hand sensor 140 having a conductive sheath 142 is able to determine the temperature of a fluid and on the other hand sensor 140 is able to determine a capacity change between the air volume and the fluid volume in the interior of housing 110, in order to determine the filling level of the fluid therein.

In order to determine a capacity change, conductive sheath 142 of sensor 140 and conductive sheath 124 of heating device 120 serve as electrodes. As the fluid in housing 110 rises or falls, an electrical circuit (not shown) determines the resulting capacity change between conductive sheath 142 of sensor 140 and conductive sheath 124 of heating device 120. This capacity change can be converted by the electrical circuit to the fluid level in housing 110.

It should be noted that one of conductive sheath 142 of sensor 140 or conductive sheath 124 of heating device 120 is not necessary, if the fluid in housing 110 is conductive. In this particular case, one conductive sheath 124, 142 is sufficient, in order to avoid electrolytic reactions.

Further, the response characteristics of sensor 140 are preferably configured in such a way that fluid drops that reach sensor 140 during the supply of fluid or boiling of fluid do not lead to misdetections.

It should be noted, that in order to determine a capacity change, the dielectric constants of the two materials in the interior of housing 110, i.e. here fluid and air, have to differ from each other.

In the embodiment discussed above, hot water and steam generating device 100 has been shown with a cylindrical housing 110. However, the shape of housing 110 is not limited to a cylindrical form, housing 110 may have any suitable shape, the cross-section of housing 110 may be for instance any polygon or oval.

As already mentioned above, hot water and steam generating device 100 is capable of heating up a flowing fluid, which flows from inlet port 110a through the interior of housing 110 to outlet port 110b, and acts therefore as a flow through heater. Further, hot water and steam generating device 100 is also capable of bringing a stagnant fluid to boil, in order to generate steam in the interior of housing 110 which also flows to outlet port 110b of housing 110.

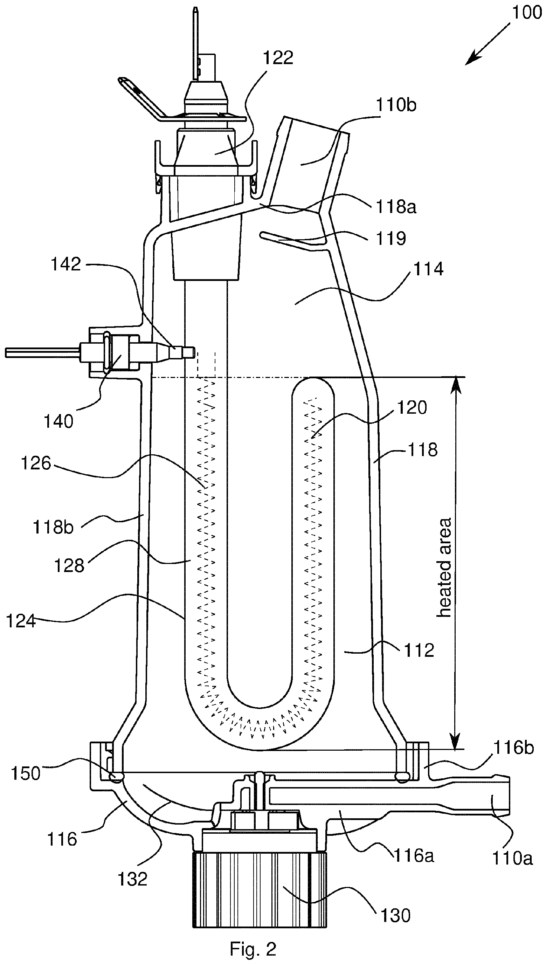

Fig. 2 shows hot water and steam generating device 100 in a flow through heater operation mode, in which hot water and steam generating device 100 heats up a fluid which is pumped from inlet port 110a through the interior of housing 110 to outlet port 110b, wherein heating device 120 heats up the flowing fluid in housing 110.

Sensor 140 determines, preferably continuously, the temperature of the flowing fluid. An electrical circuit controls the amount of fluid passaging through outlet port 110b and thereby indirectly controls the fluid temperature which depends inter alia on the amount of fluid passaging through outlet port 110b. The fluid flow rate may be regulated, for instance, by varying the power of pump 130 or by adjusting the diameter of outlet port 110b.

Optionally, instead of varying the amount of fluid passaging through outlet port 110b, the power of heating device 120 may also be varied, in order to reach the desired fluid temperature near outlet port 110b of housing 110. Of course, it is also possible to vary both, the amount of fluid passaging through outlet port 110b and the power of heating device 120.

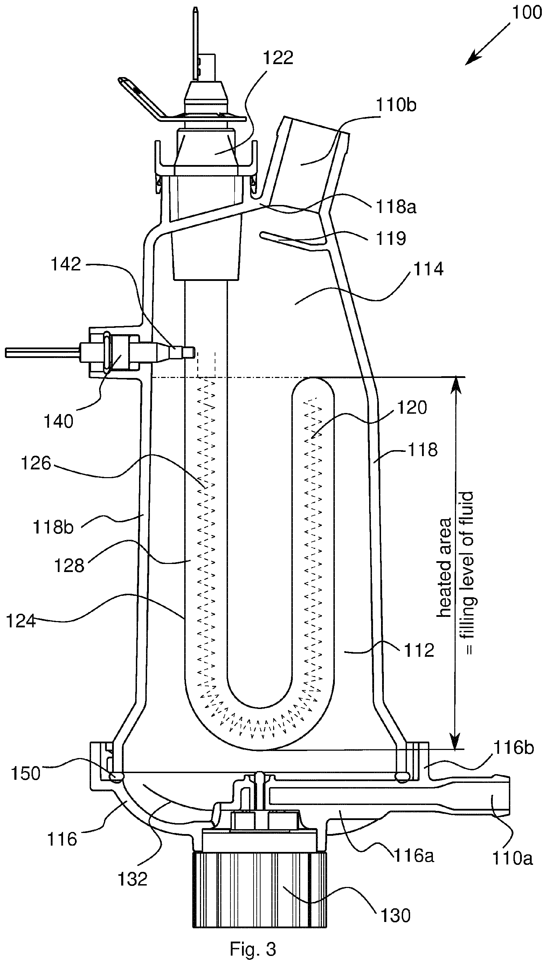

Fig. 3 shows hot water and steam generating device 100 in a steam generator operation mode, in which hot water and steam generating device 100 generates steam by bringing stagnant fluid in the interior of housing 110 to boil. To control the fluid level in housing 110, an electrical circuit (not shown) monitors the capacity change between the fluid volume and air volume in housing 110 using conductive sheath 142 of sensor 140 and conductive sheath 124 of heating device 120 as electrodes. By using the information of the capacity change in housing 110, the electrical circuit is capable of opening inlet port 110a to refill fluid as required. In order to achieve the highest possible efficiency, the fluid is preferably filled to just above the heated area of heating device 120.

In order to avoid dry running and excess temperatures in the interior of housing 110 of hot water and steam generating device 100, a safety shutdown may be implemented. The temperature determined by sensor 140 may be used to check whether a dry running in the interior of housing 110 is present or not. If a determined temperature exceeds a predefined temperature, hot water and steam generating device 100 shuts down automatically.

### REFERENCE SIGNS LIST

- 100: hot water and steam generating device
- 110: housing
- 110a: inlet port
- 110b: outlet port
- 112: lower section of housing
- 114: upper section of housing
- 116: lower part
- 116a: bottom plate
- 116b: side wall
- 118: upper part
- 118a: top plate
- 118b: side wall
- 119: protecting device
- 120: heating device
- 122: end portions of heating device
- 124: conductive sheath
- 126: heating element
- 128: electrically insulating material
- 130: pump
- 132: rotor
- 140: sensor
- 142: conductive sheath
- 150: sealing member

## Claims

1. A hot water and steam generating device (100) comprising:
a housing (110) having an inlet port (110a) and an outlet port (110b), wherein the housing (110) is adapted to receive a fluid to be heated and/or vaporized, the housing (110) having a lower section (112) and an upper section (114), wherein the inlet port (110a) is preferably arranged at the lower section (112) of the housing (110) and the outlet port (110b) is preferably arranged at the upper section (114) of the housing (110);
at least one heating device (120) which projects into the interior of the housing (110), wherein the at least one heating device (120) has at least one heated area at least in the region of the lower section (112) of the housing (110);
a pump (130) which is capable of pumping fluid into or through the interior of the housing (110); and
a single sensor (140),
wherein the single sensor (140) is configured to determine the temperature of the fluid in the interior of the housing (110) and the filling level of the fluid in the interior of the housing (110).

2. The hot water and steam generating device (100) according to claim 1,
wherein the sensor (140) is configured to determine the temperature of the fluid in the interior of the housing (110) by means of measuring a resistance change of the sensor (140).

3. The hot water and steam generating device (100) according to claim 1 or 2,
wherein the sensor (140) is configured to determine the filling level of the fluid in the interior of the housing (110) by means of measuring a capacity change of the ratio of air volume and fluid volume in the interior of the housing (110).

4. The hot water and steam generating device (100) according to claim 3,
wherein the capacity change is determined between the sensor (140) and the heating device (120).

5. The hot water and steam generating device (100) according to any of claims 1 to 4,
wherein the sensor (140) is arranged above the heated area of the heating device (120).

6. The hot water and steam generating device (100) according to any of claims 1 to 5,
wherein the sensor (140) is arranged between the heated area of the heating device (120) and the outlet port (110b) of the housing (110).

7. The hot water and steam generating device (100) according to any of claims 1 to 6,
wherein the sensor (140) is a NTC sensor having preferably a conductive sheath (142).

8. The hot water and steam generating device (100) according to any of claims 1 to 7, wherein the pump (130) is a wet-type rotor pump.

9. The hot water and steam generating device (100) according to any of claims 1 to 8,
wherein the housing (110) has a substantially cylindrical shape, which is preferably tapered in the direction to the outlet port (110b) of the housing (110).

10. The hot water and steam generating device (100) according to any of claims 1 to 9,
wherein the housing (110) consists of two parts, a lower part (116) comprising the inlet port (110a) and an opening for the pump (130), and an upper part (118) comprising the outlet port (110b), at least one opening for the heating device (120) and an opening for the sensor (140).

11. The hot water and steam generating device (100) according to any of claims 1 to 10,
wherein the housing (110) is made of a non-conductive material such as a plastics material.

12. The hot water and steam generating device (100) according to any of claims 1 to 11,
wherein the heating device (120) is a tubular heating device.

13. The hot water and steam generating device (100) according to any of claims 1 to 12,
wherein the heating device (120) is fluid-tightly coupled to the housing (110).

14. A method for controlling a hot water and steam generating device (100) according to any of claims 1 to 13, wherein the method comprises two operation modes:
i) a flow through heater operation mode comprising the steps of:
pumping fluid to be heated from the inlet port (110a) through the housing (110) to the outlet port (110b), wherein the fluid is heated by the heating device (120) in the housing (110);
determining the fluid temperature in the housing (110) by the sensor (140); and
adjusting the fluid flow rate to reach a predetermined fluid temperature at the outlet port (110b) of the housing (110); and
ii) a steam generator operation mode comprising the steps of:
pumping a fluid to be vaporized into the interior of the housing (110) until the heated area of the heating device (120) is covered with the fluid;
heating up the fluid to generate steam which flows through the outlet port (110b) of the housing (110); and
controlling the fluid level by determining a capacity change between air volume and fluid volume in the housing (110) by the sensor (140),
wherein the hot water and steam generating device (100) is switchable between the flow through heater operation mode and the steam generator operation mode.

15. The method according to claim 14,
wherein the sensor (140) and the heating device (120) act as electrodes configured to determine the capacity change between air volume and fluid volume in the interior of the housing (110).
